# EUROPEAN PATENT APPLICATION

(11) **EP 2 239 528 A1**
(43) Date of publication of application: **13.10.2010**
(21) Application number: 10382071.8
(22) Date of filing: 30.03.2010
(51) Int. Cl.: F25D 25/00, F25D 17/04, A47B 88/20

(54) **Container for a cooling appliance**

(30) Priority: 30.03.2009 ES 200930017
(71) Applicant: Fagor, S. Coop., 20500 Arrasate-Mondragon (ES)
(72) Inventor: Iturriaga Mallabia, Guruzne, 48270 MARKINA-XEMEIN (ES)
(74) Representative: Igartua, Ismael

(57) **Abstract**

Container for storing food products, in particular for a cooling appliance, comprising a front wall (2), a rear wall (3), two side walls (4), and a base (5) where a plurality of holes (11) are disposed to enable air to circulate. The container (1) comprises at least one rib (6) that is suitable for fixing a divider inside the container and is disposed in such a way that it prevents food disposed in the container (1) from completely obstructing at least one of the holes (11), thereby guaranteeing the circulation of air.

## Description

### TECHNICAL FIELD

The present invention relates to containers for cooling appliances that comprise holes to enable the circulation of air.

### PRIOR ART

There are known cooling appliances that comprise containers comprising holes in the base of the container for the circulation of air.

JP 2002286357A2 discloses a container for a cooling appliance for storing food. Said container has a rectangular parallelepipedic structure and is manufactured from a transparent plastic material or glass and is also disposed with a cover. The container comprises a plurality of holes in the bottom part of the four sides and in the base. Said container also comprises short feet in the bottom part to prevent the base of the container and the top part of the tray of the cooling appliance from coming into contact.

### DISCLOSURE OF THE INVENTION

It is the object of this invention to provide a cooling appliance container that comprises holes to enable air to circulate and which includes means for ensuring that at least one of the holes is not obstructed, as defined in the claims.

The container of the invention comprises:
- a front wall,
- a rear wall,
- two side walls, and
- a base where a plurality of holes are disposed to enable air to circulate.

The container also comprises at least one rib suitable for fixing a divider inside the container. Said rib is disposed in such a way that it prevents the food situated in the container from completely obstructing at least one of the holes, thereby guaranteeing the circulation of air.

With the container of the invention at least one of the holes for the circulation of air is not obstructed when food is placed inside the container. The rib thus performs a double function: it fixes a divider in place and prevents the total obstruction of the circulation of air. Not only does said rib guarantee the circulation of air, it also helps the liquids released by the food to drain away through the holes.

These and other advantages and characteristics of the invention will be made evident in the light of the drawings and the detailed description thereof.

### DESCRIPTION OF THE DRAWINGS

Figure 1 shows a perspective view of a first embodiment of a container for a cooling appliance according to the invention.
Figure 2 shows a second perspective view of an embodiment of Figure 1 where a divider has been added.
Figure 3 shows a perspective view of a cooling appliance where a container according to the embodiment of Figure 1 may be placed.
Figure 4 shows a perspective view of a second embodiment of a container for a cooling appliance according to the invention.

### DETAILED DISCLOSURE OF THE INVENTION

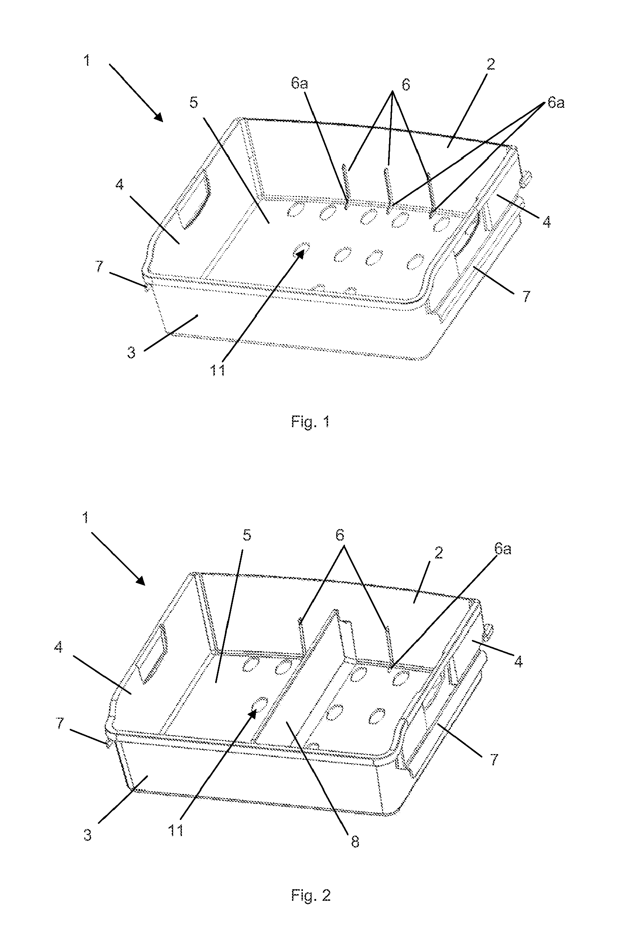

Figure 1 shows a container for a cooling appliance suitable for storing food products and comprising:
- a front wall 2,
- a rear wall 3,
- two side walls 4, and
- a base 5 where a plurality of holes 11 are disposed to enable air to circulate.

The container 1, in the preferred embodiment, comprises three ribs 6 suitable for fixing a divider 8 inside the container, which divides the interior of said container 1 into two areas. Said ribs 6 are disposed in such a way that they prevent the food situated in the container 1 from completely obstructing at least one of the holes 11, thereby guaranteeing the circulation of air and the homogenisation of the temperature. The ribs 6 are supported on the base 5 and on the inner face of the front wall 2, one of the ends of the divider 8 being fixed on one of said ribs 6 according to the position selected for the divider 8. The ribs 6 have, associated to them, respective ribs (not shown in Figures 1 and 2) supported on the base 5 and on the inner face of the rear wall 3 where the other end of the divider 8 is fixed.

With the container 1 of the invention at least one of the holes 11 is not obstructed when food is placed inside the container 1, thereby guaranteeing the circulation of air and the evacuation of any liquids released by the food.

Each of the ribs 6, as shown in Figures 1 and 2, comprises an extension 6a in a longitudinal direction on the base 5, which acts as a stopper or a support when food is placed in the container 1.

In a preferred embodiment, the holes 11, as can be seen in Figures 1 and 2, are oval in shape, although they may also have, for example, a rectangular, circular or hexagonal shape.

In a preferred embodiment, the holes 11 are disposed aligned and the number of holes decreases the further they are from the front face 2, as can be seen in Figures 1 and 2. In said embodiment, air enters the inner cavity 10 of the cooling appliance 100 through the rear part of the inner cavity 10, therefore the thermal sensation in this area is more intense. For the purpose of homogenising the temperature in the container 1 and ensuring the air is properly recirculated in the inner cavity 10, the holes 11 are arranged as described above.

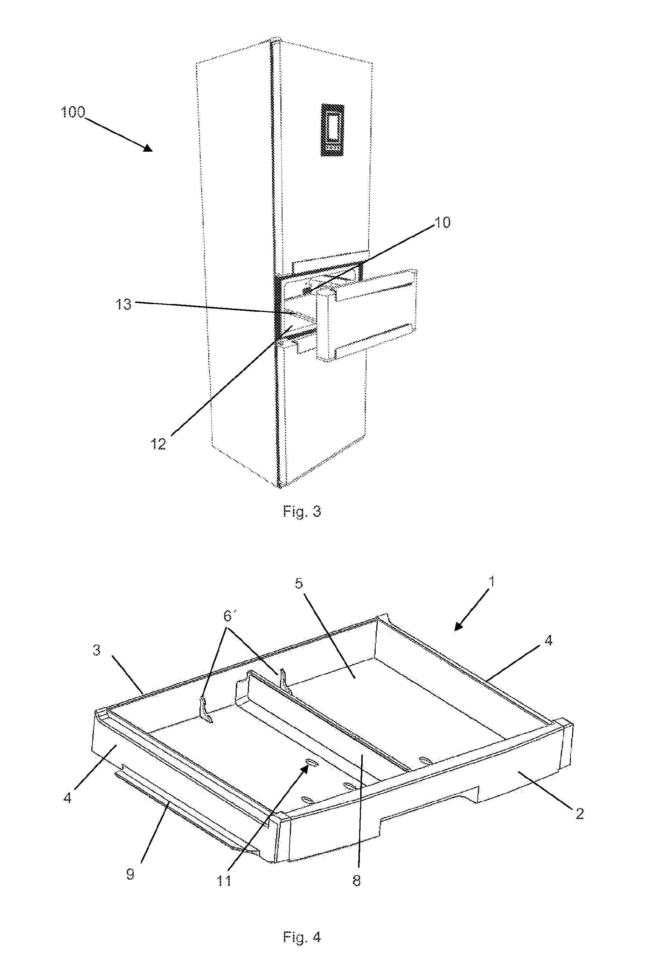

The container 1 also comprises a tongue 7, as shown in Figures 1 and 2, on each side 4 so that the container 1 may be supported on the structure, such as a guide 13 (see Figure 3), of the cooling appliance 100. As a result, the base 5 of the container 1 is prevented from being supported on the lower face of the inner cavity 10 and, therefore, the holes 11 are prevented from being covered by the cavity 10.

Figure 4 shows a second embodiment where, to prevent the base 5 of the container 1 from being supported on the lower face of the inner cavity 10, the container 1 comprises longitudinal ribs 9 on each side 4 that fit or are guided into grooves disposed in the sides of the inner cavity 10 (not shown in the figures). The container 1 of this second embodiment has a smaller depth than the container 1 of the first embodiment and may be disposed, for example, on top of the container 1 of said first embodiment.

Additionally, in this second embodiment the container 1 comprises three ribs (not shown in Figure 4) with the double functionary of the ribs 6 of the first embodiment, as well as three respective ribs 6 for fixing the other end of the divider 8.

In a preferred embodiment the container 1 of the invention is made of plastic or glass.

## Claims

1. Container for storing food products, in particular for a cooling appliance (100), comprising
a front wall (2),
a rear wall (3),
two side walls (4), and
a base (5) where a plurality of holes (11) are disposed to enable air to circulate,
**characterised in that** the container (1) comprises at least one rib (6) that is suitable for fixing a divider (8) inside the container (1) and is disposed in such a way that it prevents food disposed in the container (1) from completely obstructing at least one of the holes (11), thereby guaranteeing the circulation of air.

2. Container for a cooling appliance according to claim 1, wherein said rib (6) comprises an extension (6a) in a longitudinal direction in the base (5), which acts as a stopper or as a support when food is placed in the container (1).

3. Container for a cooling appliance according to claims 1 or 2, comprising three ribs (6) that determine three possible locations for the divider (8).

4. Container for a cooling appliance according to any of the preceding claims, wherein the holes (11) are substantially oval in shape.

5. Container for a cooling appliance according to any of the preceding claims, wherein the holes (11) are substantially aligned and the number of holes (11) decreases the further they are from the front face (2).

6. Container for a cooling appliance according to any of the preceding claims, wherein the container (1) comprises means for preventing the base (5) of said container (1) from being supported on the bottom part (12) of an inner cavity (10) of the cooling appliance (100).

7. Container for a cooling appliance according to any of the preceding claims, wherein the container is made of plastic or glass.

8. Cooling appliance **characterised in that** it comprises at least one container according to any of the preceding claims.
